# EUROPEAN PATENT APPLICATION

(11) **EP 1 077 558 A1**
(43) Date of publication of application: **21.02.2001**
(21) Application number: 00202850.4
(22) Date of filing: 14.08.2000
(51) Int. Cl.: H04L 12/56

(54) **Communication network**

(30) Priority: 17.08.1999 NL 1012841
(71) Applicant: Eighty Twenty B.V., 1311 AP Almere (NL)
(72) Inventor: Barclay, Garry Blyth, 1311 KP Almere (NL)
(74) Representative: Van Breda, Jacobus

(57) **Abstract**

Communication network comprising senders and receivers and interlinks providing datacommunication channels between the senders and receivers, and software switches to provide alternate routes between any one sender and any one receiver, wherein at least once upon its connection to the network any one receiver issues a first proxy to each of its connected switches or causes its connected switches to construct a proxy on its behalf, and each switch, at least once upon its connection to the network, issues at its sender-end a series of second proxies, each second proxy embodying one of the proxies received at its receiver-end and wherein at least each of the switches directly connected to the senders include a router to select the routing of a message from any one sender to the intended receiver.

On issuance of each message to the switch any one sender of such message includes therewith, or causes the switch to include on its behalf, an amount of control logic to such message allowing the message, in addition to the receiver proxies, to collaborate with the router in the routing operation of the switch.

## Description

The invention relates to a communication network comprising senders and receivers and interlinks providing datacommunication channels between the senders and receivers, and software switches to provide alternate routes between any one sender and any one receiver. Such a communication network is used for instance in a distributed computer network, whereby messages must be communicated from one computer to the other. Another example usage is as an inter, or intraapplication communications infrastructure within a single computer.

For the purposes of this application a switch as mentioned above is an application that provides a single connection for each sender and receiver of messages. The switch provides functionality to route and deliver messages to the correct recipient, and return any response. It will also, where possible, provide message translation between incompatible message formats.

Switches are increasingly commonly used to alleviate the costs and complexity of connecting many senders and receivers in message-processing applications. It frequently occurs then that switches are connected to other switches - either within a single company site, between sites or even different companies. Such constructions of switches having parallel or series connection may be called 'cascaded switches'.

Because the sender using a switch perceives it as a single entity there is no distinction (for the sender) between the various receivers of the messages sent. When two switches are connected together in series, the first (sender-side) can no longer distinguish between the eventual receivers of the messages connected to the second (receiver-side) switch. If the sender-side switch has an alternate route to the receiver, for example, then there is no way for it to identify when this should be used. All receiver-specific error recovery must take place at the receiver side. This places a high burden on the sender side switch (and the switch-to-switch connection) to operate without failures. In a distributed environment where the switch-to-switch connection will often be implemented as an external communications link, this is a significant problem to overcome.

In such a case when the rest of the messages through the (receiver-side) switch continue to work correctly though all the messages for the failed receiver will be lost, a further problem is then that the sender-side switch will perceive this as a degradation of service (a proportion of the messages through the receiver-side switch are affected). Because the degradation of service cannot be associated with a specific receiver, the service provided by the received-side switch as a whole is perceived to degrade. Though other receivers connected to this switch may be operating perfectly, users of their services will experience degradation in service.

Furthermore, if the sender-side switch holds allocation resources related to the processing of the messages (such as memory or communications resources) then a single slowly responding receiver may cause these resources to be used up. This has the effect of limiting the available resources for the requests to the other receivers, leading to a degradation or eventual loss of service for all receivers. In this way, problems originating at the receiver-side of the network of switches may propagate throughout the network. Cascaded switches can only provide an aggregate service level that is constrained by the characteristics of the worst receiver.

Because of these problems, existing architectures are severely limited in the number of switches which can effectively be connected and in the complexity of connectivity between switches. These problems are therefore a significant limiting factor in the extension of a network with further switches.

The invention is aimed to overcome the above draw-backs. The communication network according to the invention is to that end organised such that at least once upon its connection to the network any one receiver issues a first proxy to each of its connected switches or causes its connected switches to construct a proxy on its behalf, and that each switch, at least once upon its connection to the network, issues at its sender-end a series of second proxies, each second proxy embodying one of the proxies received at its receiver-end and that at least each of the switches directly connected to the senders include a router to select the routing of a message from any one sender to the intended receiver.

The communication network according to the invention allows systems integrators to deploy many switches and use them as the building blocks of their communication network architectures. Each site or processing domain may implement a number of local switches connected to many switches in other areas of the network. The switches act together as a 'switching fabric' for the senders and receivers in the applications, improving their accessibility and connectivity as well as supporting location independence, improved fault tolerance and more effective capacity management.

The invention provides a 'fundamental enabling mechanism' to support a transition from centralised single-switch processing to a distributed architecture built on low-cost commodity platforms. Because switches act as a single coherent 'fabric', it is possible to have more individual switches in the enterprise connected in more complex ways. Each new switch can be deployed without introducing any of the problems normally associated with cascaded switches.

In another aspect of the invention the communication network includes an event-triggered mapping organ to cause the issuance of first and second proxies depending on the occurrence of any event that effects the possible routing of messages. This facility allows every switch to have an accurate view of the status of the switch fabric connectivity by a switch-to-switch protocol which exchanges status information whenever notable events occur (such as a network failure). In determining a route between sender and receiver, the status of all the connections in each applicable route must be available to the router. The mapping organ is designed to dynamically manipulate the level of detail of this status information to maintain the highest possible amount of summarisation in which the status information is sufficiently complete for the entire communication network. This mechanism ensures that the number of switches and connections can scale effectively without swamping inter-switch traffic with status information.

In still another aspect of the invention the communication network is organised such that on issuance of each message to the switch any one sender of such message includes therewith, or causes the switch to include on its behalf, an amount of control logic to such message. This logic allows the message, in addition to the receiver proxies, to collaborate with the router in the routing operation of each switch. In effect this control logic acts as a message-specific proxy for the sender. This allows the sender of the message to actively participate in the routing mechanism. Design trade-offs are possible which delegate varying levels of autonomy to the three parties in the routing collaboration (sender, router and receiver(s)), depending on the circumstances of the switch implementation.

As an example of the active participation of the message, or sender proxy, in the routing collaboration consider a case where the router is unable to determine a valid route to a receiver for the message. The router may query the message to determine how to proceed. The message may then make a determination whether there is sufficient time to complete the message exchange before the sender times out, or the message's content expires. If not then the message may respond with information which causes the router to create a suitable reply message and route this back to the original sender. In a more complex scenario, the message may query the remaining receivers to determine whether any of them can be used as alternates. This flexible and dynamic collaboration between proxy representations of the sender, switch and receivers is a major benefit afforded by the invention. As well as resolving the problems associated with cascaded switches, this mechanism offers a highly adaptable architecture for any service provision within a switch-based communications infrastructure. Some examples of services which would benefit from implementation upon this basis are: logging, security, fault-tolerance, context-management, transaction control, auditing, service-billing and message translation. The invention provides therefore a highly suitable foundation for a switch even in cases where the "cascaded switch" problem does not apply.

The invention shall now be further elucidated with reference to the accompanying drawing, in which
Figure 1 shows a communication network according to the prior art, and
Figure 2 shows a communication network according to the invention.

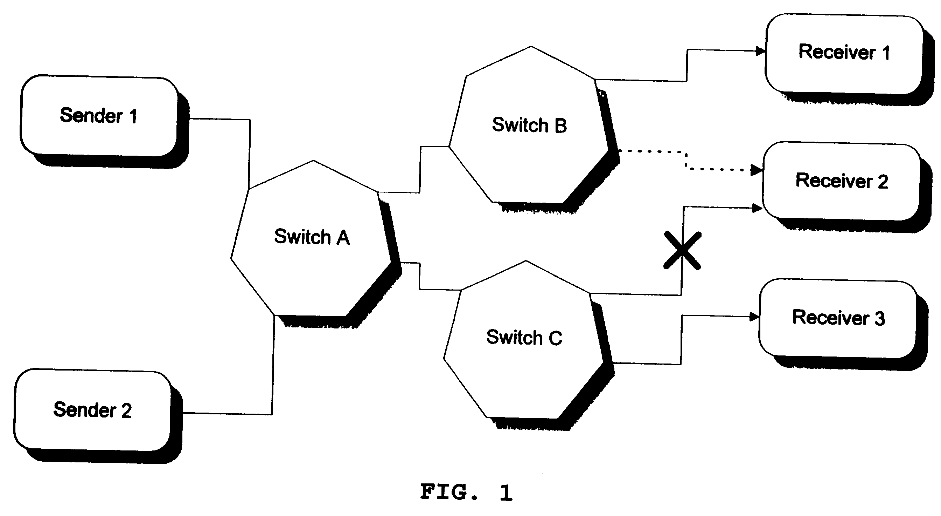

Referring now first to fig. 1, the problem that is associated with the prior art communication network is displayed.

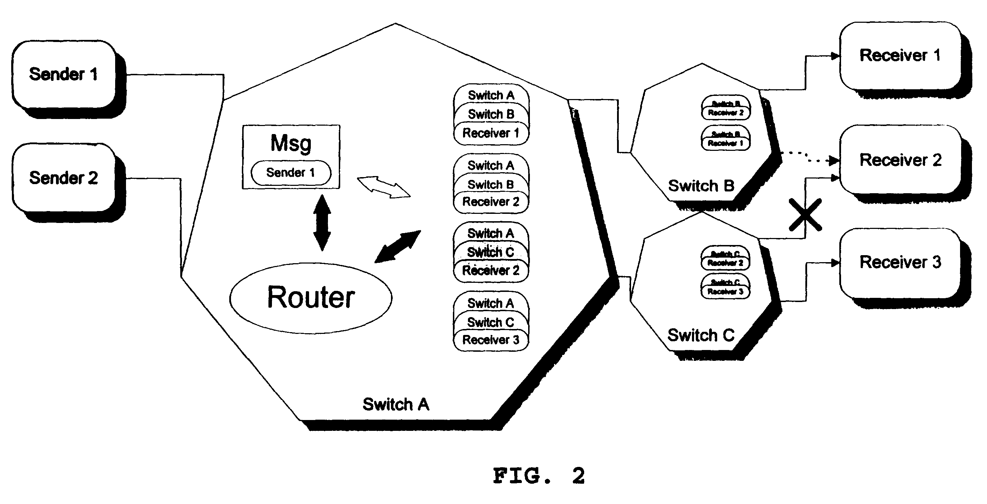

Sender 1 sends messages through cascaded switches A and C to receiver 2. If the connection to receiver 2 fails then switch A sees that a proportion of the messages sent through switch C are failing, but it has no way of knowing that a) the messages are for receiver 2, and b) it can use the connection available through switch B as an alternative route. Sender 1 sees that a proportion of the messages it sends are affected, but since it cannot distinguish between receivers, it must perceive the effect as a degradation of the complete service (reflecting unfairly on receiver 3 and possibly 1). If switch A commits any resources to transactions through switch C, then it may eventually be affected to the point where all traffic through the switch is affected. This would have a knock-on affect on sender 2 even though it may generate no traffic at all for receiver 2. The problem is solved with the communication network according to the invention, which is schematically shown in figure 2.

According to the invention switches B and C create proxies for each of their receivers. A receiver proxy as understood by a person skilled in the art is some data and programming logic which can act as a representative of the receiver for the purposes of the switch functions. For example, a receiver proxy can respond to queries about the type of message the receiver is prepared to accept. Each switch wraps the proxies of its receivers. By reason thereof, each proxy in switch A embodies the complete route to the receiver and is prepared to answer queries about the accessibility of the receiver.

The router is the functionality in the switch connected to the sender which has primary responsibility in mediating between the message and the receiver proxies. The basic mechanism which must be supplied by all receiver proxies as well as by the message and the router itself is "behaviour discovery". The various components may be queried to determine whether they support a class of behaviour before that behaviour is enlisted in subsequent processing. For example: at it's most basic, the routing mechanism proceeds in three stages: remove irrelevant receivers, score the remainder, then allow the message to select one route (defaulting to the route with the best score). This simple mechanism requires no active participation of the message or receiver proxies, and will be effective with just the default proxy logic provided by the switch, which answers "no" in response to behaviour-discovery queries such as "do you support participation in scoring".

As more functional logic is added to the message or receiver proxies they can participate more actively in their part of the algorithm and can enlist further functionality of the other components. A message, for example, can query for specialised behaviour in the router to support the particular requirements of the message type, and can also proceed intelligently where such functionality is unavailable. In this manner, the scoring algorithm can be extended beyond the basic mechanism to whatever complexity and richness of collaboration is necessary to support the routing functionality required, and the routing service provision may be expanded naturally to include additional services based upon the same dynamic discovery mechanism.

To summarize, the invention embodies four aspects, i.e.:
1. Routing for the entire network is performed in the sender-side switch by a collaborative mechanism based on complete and accurate information from sender, switches and receiver. To facilitate this:
2. The receiver must issue proxies (or have a default issued on its behalf) to the receiver-side switch. Each receiver-side switch wraps the receiver-side proxies and gives these to any connected sender-side switch. In this manner the switch to which the sender is connected has a collection of proxies each one of which embodies a complete route to a receiver;
3. The receiver proxies are preferably updated or replaced at each and any relevant change of status of switch component or interlink, and
4. The sender preferably includes program logic (or have default logic included on its behalf) in each message to send through the switch. This advantageously represents the sender accurately in the routing collaboration.

The invention allows the deployment of switches using commodity hardware and software of moderate capacity and fault-tolerance, whilst retaining the capability to scale and grow the communication network to mainframe-class volumes and fault-tolerance without compromising the effectiveness of the resulting architecture. The invention offers new levels of fidelity in modelling the physical or logical distribution of the areas within the business environment (such as a switch per physical division) in a coherent, connected infrastructure.

## Claims

1. Communication network comprising senders and receivers and interlinks providing datacommunication channels between the senders and receivers, and software switches to provide alternate routes between any one sender and any one receiver, **characterised** in that at least once upon its connection to the network any one receiver issues a first proxy to each of its connected switches or causes its connected switches to construct a proxy on its behalf, and that each switch, at least once upon its connection to the network, issues at its sender-end a series of second proxies, each second proxy embodying one of the proxies received at its receiver-end and that at least each of the switches directly connected to the senders include a router to select the routing of a message from any one sender to the intended receiver.

2. Communication network according to claim 1, **characterised** in that it includes an event-triggered mapping organ to cause the issuance of first and second proxies depending on the occurrence of any event that effects the possible routing of messages.

3. Communication network according to any one of claim 1-2, **characterised** in that on issuance of each message to the switch any one sender of such message includes therewith, or causes the switch to include on its behalf, an amount of control logic to such message allowing the message, in addition to the receiver proxies, to collaborate with the router in the routing operation of the switch.
